# FASCICULE DE BREVET EUROPEEN

(11) **EP 0 693 758 B1**
(45) Date de publication et mention de la délivrance du brevet: **01.04.1998**
(21) Numéro de dépôt: 95420199.2
(22) Date de dépôt: 17.07.1995
(51) Int. Cl.: H01G 2/14

(54) **Condensateur avec protection contre la surpression**
Kondensator mit Überdruckschutz
Capacitor with overpressure protection

(30) Priorité: 20.07.1994 FR 9409242
(43) Date de publication de la demande: 24.01.1996
(73) Titulaire: ALPES TECHNOLOGIES (société anonyme), F-74940 Annecy le Vieux (FR)
(72) Inventeur: Masset, Daniel, F-74290 Menthon Saint Bernard (FR)
(74) Mandataire: Poncet, Jean-François

(56) Documents cités:
- EP-A- 0 420 161
- EP-A- 0 530 115
- EP-A- 0 548 713

## Description

La présente invention concerne les condensateurs de puissance tels que ceux généralement utilisés pour la correction du facteur de puissance dans la distribution électrique basse tension.

On connaît de tels condensateurs de puissance constitués d'un ou plusieurs éléments de condensateur, chaque élément comportant un enroulement cylindrique de couches isolantes et de couches conductrices de l'électricité formant une première et une seconde électrodes de type autocicatrisant isolées l'une de l'autre. En pratique, un élément de condensateur est réalisé par l'enroulement de films plastiques diélectriques métallisés, et le condensateur consiste en un assemblage d'éléments bobinés, connectés selon un arrangement série et/ou parallèle en fonction de la puissance désirée.

Le condensateur est dit autocicatrisant lorsque la présence de défauts mineurs dans le film diélectrique entraîne un claquage localisé qui conduit à l'évaporation des électrodes au voisinage du défaut, sans dommage pour le film adjacent. Lors de sollicitations anormales, notamment de surtensions ou d'élévations de température, un claquage du diélectrique peut devenir non autocicatrisant, c'est-à-dire trop important pour permettre l'autocicatrisation du condensateur. L'augmentation résultante du courant qui traverse l'élément provoque une élévation de température au voisinage du défaut et une production de gaz de décomposition du film plastique diélectrique. L'élément étant généralement disposé dans un boîtier étanche, le boîtier peut exploser sous l'effet de la pression produite par les gaz.

Pour éviter les risques d'explosion, plusieurs solutions ont déjà été proposées.

Une première solution consiste à introduire le condensateur dans un boîtier métallique étanche dont une partie de paroi extérieure peut se déformer et provoquer l'arrachement de connexions qui relient le condensateur au réseau électrique. Dans le boîtier, le condensateur peut avantageusement être noyé dans une huile diélectrique, évitant les réamorçages et les explosions. Il faut toutefois utiliser de grandes quantités d'huile, ce qui augmente les risques d'incendie. Avec ou sans huile diélectrique, une telle solution présente l'inconvénient d'une déformation externe apparente du boîtier.

Les documents EP-A-0 356 348 et EP-A-0 530 115 décrivent une autre solution dans laquelle chaque élément de condensateur est logé dans la cavité intérieure d'un boîtier rigide délimité par une paroi périphérique étanche en une résine diélectrique, et comprend une membrane intermédiaire déformable placée au voisinage immédiat d'une face d'extrémité d'un élément à enroulement cylindrique axial de deux électrodes de type autocicatrisant isolées l'une de l'autre. La membrane déformable intermédiaire, dont la périphérie est solidarisée de façon étanche à la paroi périphérique, peut se déformer et se déplacer axialement sous l'action de la pression des gaz produits par la décomposition d'une portion de l'élément à enroulement cylindrique en cas de claquage non autocicatrisant. Un premier conducteur d'entrée comprend une portion radiale connectée électriquement à la première électrode selon la première face d'extrémité de l'enroulement cylindrique, et se raccordant à une seconde portion axiale tendue entre un point fixe solidaire de l'enroulement cylindrique et la zone centrale de la membrane déformable. En cas de claquage non autocicatrisant, la membrane déformable exerce une traction axiale sur la seconde portion axiale cassable de premier conducteur d'entrée, et produit sa rupture et la déconnexion du condensateur.

La portion axiale cassable de premier conducteur d'entrée est nécessairement de section réduite, pour se rompre lorsque la force exercée directement par la membrane déformable atteint une valeur de rupture prédéterminée. Il en résulte que cette portion axiale cassable de premier conducteur d'entrée tend également à s'échauffer lors du passage d'un courant élevé dans le condensateur, et peut faire office de fusible. Ces deux fonctionnements sont toutefois contradictoires : pour obtenir une coupure efficace du circuit électrique lors d'un claquage non autocicatrisant, il convient de réduire la section de la portion axiale cassable du premier conducteur d'entrée, afin que sa rupture intervienne le plus tôt possible après le début de production des gaz de combustion ; par contre, pour que les coupures par fusion n'interviennent que lors des courants d'intensité très élevée, il faut que la portion axiale cassable de premier conducteur d'entrée ait une section relativement importante. Un compromis est difficile à trouver entre ces deux exigences contradictoires, et la solution est d'autant moins facile lorsque le condensateur est destiné à équiper des circuits électroniques de puissance, circuits dans lesquels se produisent des courants transitoires très intenses.

En outre, dans ces structures connues de condensateur, la portion axiale cassable de premier conducteur d'entrée constitue un élément sensible et relativement fragile, qu'il est assez fréquent d'endommager partiellement lors du montage. Il en résulte une dispersion dans les caractéristiques de fonctionnement de ces condensateurs, et la nécessité d'un contrôle systématique en sortie de fabrication. Egalement, l'agencement des éléments nécessite un montage manuel, et rend impossible une automatisation complète.

Le document EP-A-0 548 713 décrit un condensateur électrique à deux bobines contenues dans un boîtier métallique. L'une des connexions du condensateur est assurée par un conducteur métallique à extrémités librement mobiles et dont la portion intermédiaire traverse deux éléments en matière plastique dont l'un est fixe et l'autre est mobile et sollicité par un diaphragme. Si la pression augmente dans le boîtier, le diaphragme repoussé par les gaz déplace l'élément mobile en travers du conducteur métallique, de sorte que les éléments en matière plastique agissent comme une lame et une contre-lame pour sectionner le conducteur métallique. Il apparaît que la force nécessaire pour sectionner le conducteur métallique est encore élevée, et que sa valeur est variable en fonction de nombreux paramètres tels que la distance relative entre les éléments en matière plastique. En outre, la structure du dispositif de déconnexion représentée est adaptée sur un ensemble de bobines, provoquant la déconnexion de l'ensemble lorsqu'un défaut apparaît sur une seule bobine. La section du conducteur métallique doit être accrue pour conduire le courant électrique total, de sorte que son sectionnement est retardé. Le cheminement important des gaz nécessite la production d'une grande quantité de gaz avant que la déconnexion se produise. Le fonctionnement est ainsi trop lent pour assurer une protection efficace.

Le problème proposé par la présente invention est de supprimer les défauts éventuels de fonctionnement du dispositif de déconnexion des condensateurs autoprotégés à boîtier rigide, en évitant d'avoir recours à des parties cassables de conducteur à section réduite, tout en assurant une rupture certaine de la partie cassable dès le début de production des gaz de combustion se produisant lors d'un claquage non autocicatrisant.

On cherche simultanément à faciliter les manipulations de montage des éléments du condensateur, pour réduire les risques de dégradation de la partie cassable de premier conducteur d'entrée.

Pour atteindre ces objets ainsi que d'autres, un condensateur autoprotégé selon l'invention comprend :
- au moins un élément à enroulement cylindrique axial de couches isolantes et de couches conductrices de l'électricité formant une première et une seconde électrodes de type autocicatrisant isolées l'une de l'autre,
- un premier conducteur d'entrée connecté électriquement à la première électrode selon la première face d'extrémité de l'enroulement cylindrique,
- un second conducteur d'entrée connecté électriquement à la seconde électrode,
- un boîtier rigide à paroi périphérique étanche, enfermant l'élément à enroulement cylindrique, et traversée de manière étanche par les premier et second conducteurs d'entrée,
- une membrane intermédiaire déformable, solidarisée de façon étanche selon sa périphérie à la paroi périphérique étanche, disposée en regard de la première face d'extrémité de l'enroulement cylindrique, adaptée pour se déformer dans la direction axiale de l'enroulement cylindrique vers l'extérieur sous la poussée des gaz produits par la décomposition d'une portion de l'élément à enroulement cylindrique en cas de claquage non autocicatrisant,
- au moins une partie cassable de premier conducteur d'entrée,
- des moyens de liaison mécanique entre ladite partie cassable de premier conducteur d'entrée et ladite membrane déformable, adaptés pour rompre ladite partie cassable de premier conducteur d'entrée lors de la déformation axiale vers l'extérieur de ladite membrane déformable ;
en outre, selon l'invention :
- la partie cassable de premier conducteur d'entrée est disposée transversalement par rapport à la direction axiale de l'enroulement cylindrique, dans l'espace entre la membrane déformable et la première face d'extrémité de l'enroulement cylindrique, et est tenue à ses deux extrémités en deux points fixes,
- une portion intermédiaire de partie cassable de premier conducteur d'entrée passe entre la membrane déformable et un élément de sectionnement solidaire de la membrane déformable,
de sorte que, lors de sa déformation axiale, la membrane déformable déplace dans la direction axiale l'élément de sectionnement qui tire dans cette même direction axiale sur la portion intermédiaire de partie cassable de premier conducteur d'entrée et favorise sa rupture pour ouvrir le circuit électrique et déconnecter ainsi le condensateur. Grâce à cette disposition, la force de traction exercée sur la partie cassable de premier conducteur d'entrée est très supérieure à la force développée par la membrane déformable, et le pouvoir de sectionnement de conducteur est sensiblement augmenté, de sorte que l'on peut augmenter la section transversale de partie cassable de premier conducteur d'entrée.

Selon un mode de réalisation préféré, le condensateur est tel que :
- l'élément à enroulement cylindrique comporte un canal axial traversé par un tronçon axial de premier conducteur d'entrée dont l'extrémité est fixe et accessible depuis la première face d'extrémité de l'enroulement cylindrique,
- la partie cassable de premier conducteur d'entrée est connectée par soudure à la première face d'extrémité de l'enroulement cylindrique formant le premier point fixe, et est connectée à l'extrémité du tronçon axial de premier conducteur d'entrée formant le second point fixe.

De préférence, l'élément de sectionnement comporte une pièce tubulaire axiale logée autour de l'extrémité du tronçon axial de premier conducteur d'entrée, et munie de perçages radiaux traversés par au moins deux parties cassables transversales de premier conducteur d'entrée tendues entre l'extrémité du tronçon axial de premier conducteur d'entrée et deux soudures espacées radialement sur la première face d'extrémité d'enroulement cylindrique.

D'autres objets, caractéristiques et avantages de la présente invention ressortiront de la description suivante de modes de réalisation particuliers, faite en relation avec les figures jointes, parmi lesquelles:
- la figure 1 représente une vue schématique en coupe axiale d'un élément de condensateur selon l'invention en position normale de fonctionnement ;
- la figure 2 représente une vue schématique en coupe axiale de l'élément de condensateur de la figure 1, après un claquage non autocicatrisant ayant conduit à l'ouverture du circuit électrique ;
- la figure 3 est une vue en coupe axiale à plus grande échelle des organes de protection du condensateur de la figure 1, en position normale de fonctionnement ;
- la figure 4 illustre en coupe axiale à plus grande échelle les éléments de la figure 3 après un claquage non autocicatrisant ayant conduit à l'ouverture du circuit électrique ;
- la figure 5 est une coupe axiale d'une pièce tubulaire axiale d'élément de traction selon l'invention ;
- la figure 6 est une vue en bout de la pièce de la figure 5 ;
- la figure 7 est une vue de côté d'une vis d'assemblage pour liaison de la membrane déformable avec la pièce tubulaire axiale de la figure 5 ;
- la figure 8 est une vue de côté d'une pièce de centrage selon l'invention, en coupe axiale selon les plans A-A de la figure 9 ; et
- la figure 9 est une vue en bout de la pièce de centrage de la figure 8.

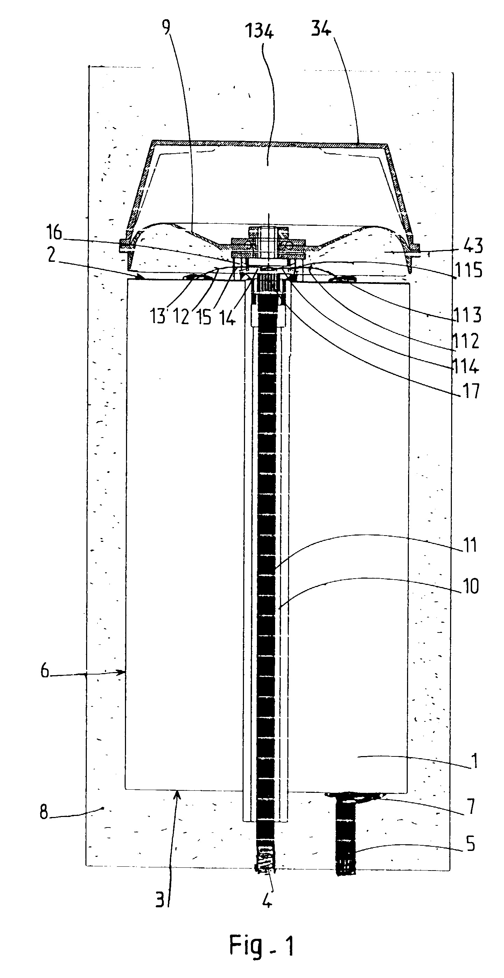

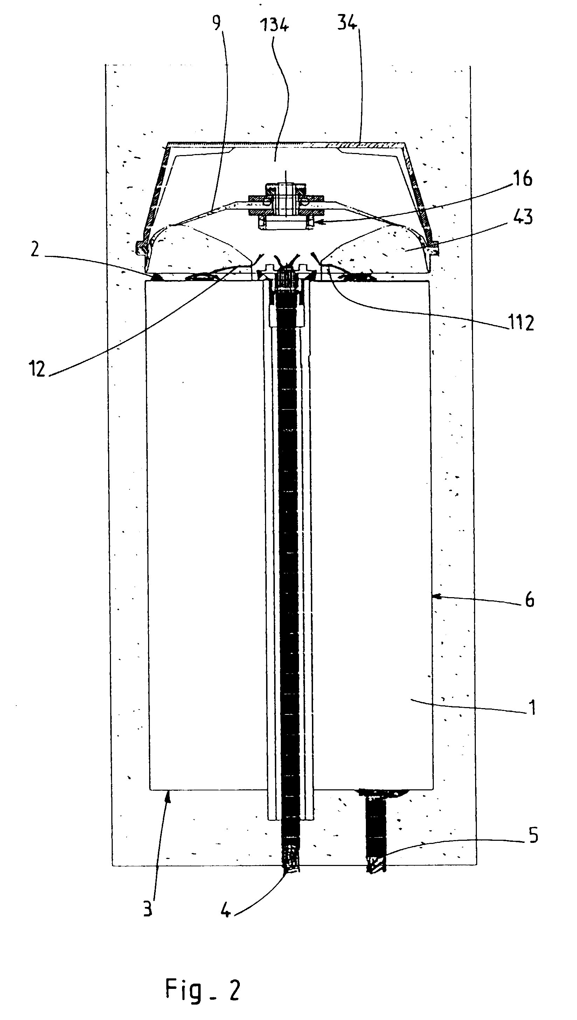

Comme le représentent les figures 1 et 2, un élément de condensateur selon la présente invention comprend au moins un élément à enroulement cylindrique 1 axial de couches isolantes et de couches conductrices de l'électricité formant une première et une seconde électrodes de type autocicatrisant isolées l'une de l'autre. La première électrode est accessible par la première face transversale d'extrémité 2 de l'enroulement cylindrique 1, tandis que la seconde électrode est accessible par la seconde face transversale d'extrémité 3 de l'enroulement cylindrique 1. Pour cela, chacune des faces 2 et 3 transversales d'extrémité est métallisée par projection de zinc en fusion, de façon connue. La première électrode est connectée électriquement à un premier conducteur d'entrée 4 du condensateur, tandis que la seconde électrode est connectée à un second conducteur d'entrée 5 du condensateur. L'enroulement cylindrique 1 est limité par une face latérale cylindrique 6, reliant les deux faces transversales d'extrémité 2 et 3.

Le second conducteur d'entrée 5 est connecté à la seconde électrode par une soudure 7.

Un boîtier rigide à paroi périphérique étanche 8 enferme l'élément à enroulement cylindrique 1. La paroi périphérique étanche 8 est traversée de manière étanche par les premier 4 et second 5 conducteurs d'entrée.

Une membrane intermédiaire déformable 9, disposée en regard de la première face d'extrémité 2 de l'enroulement cylindrique 1, est solidarisée de façon étanche par sa périphérie à la paroi périphérique étanche 8. La membrane déformable 9 sépare ainsi, dans le boîtier rigide délimité par la paroi périphérique 8, un premier compartiment contenant l'élément à enroulement cylindrique 1, et un second compartiment 134 contenant un gaz tel que l'air. La membrane déformable 9 est ainsi adaptée pour se déformer vers l'extérieur dans la direction axiale de l'enroulement cylindrique 1, depuis une position de fonctionnement normal illustrée sur la figure 1 jusqu'à une position d'expansion illustrée sur la figure 2, sous l'action de la poussée des gaz produits dans le premier compartiment par la décomposition d'une portion de l'élément à enroulement cylindrique 1 en cas de claquage non autocicatrisant.

Dans le mode de réalisation représenté, l'élément à enroulement cylindrique 1 comporte un canal axial 10 le traversant axialement de part en part. Le premier conducteur d'entrée 4 comprend un tronçon axial 11, et au moins une partie cassable 12 disposée transversalement c'est-à-dire perpendiculairement à la direction axiale. La partie cassable 12 transversale de premier conducteur d'entrée est disposée dans l'espace situé entre la membrane déformable 9 et la première face d'extrémité 2 de l'enroulement cylindrique 1, et est tenue à ses deux extrémités entre deux points fixes respectivement 13 et 14 solidaires de l'enroulement cylindrique 1. Une portion intermédiaire 15 de partie cassable 12 de premier conducteur d'entrée passe entre la membrane déformable 9 et un élément de sectionnement 16 solidaire de ladite membrane déformable 9.

Le tronçon axial 11 de premier conducteur d'entrée traverse le canal axial 10 d'enroulement cylindrique 1, et son extrémité 17 est fixe et accessible depuis la première face d'extrémité 2 de l'enroulement cylindrique 1.

La partie cassable 12 de premier conducteur d'entrée 4 est connectée à la première face d'extrémité 2 de l'enroulement cylindrique 1 par une soudure 13 formant le premier point fixe, et est connectée à l'extrémité 17 du tronçon axial 11 de premier conducteur d'entrée qui forme le second point fixe 14.

Dans le mode de réalisation représenté sur les figures, le premier conducteur d'entrée 4 comprend avantageusement une seconde partie cassable 112, diamétralement opposée à la première partie cassable 12, tenue à ses deux extrémités en deux points fixes respectivement 113 et 114, et avec une portion intermédiaire 115 passant entre la membrane déformable 9 et l'élément de sectionnement 16.

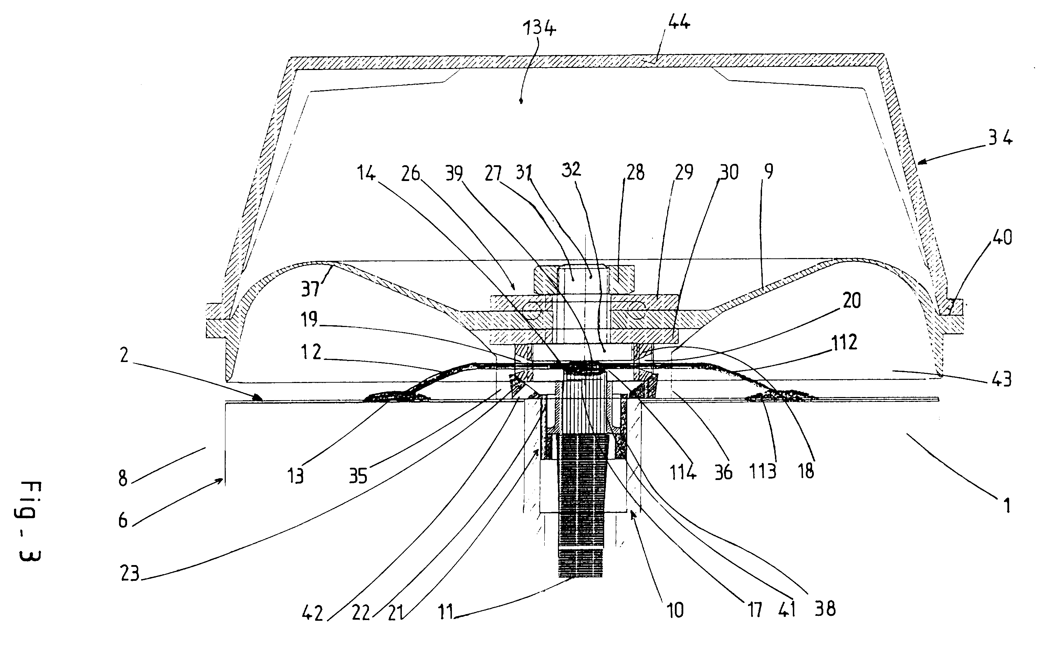

Comme on le voit mieux sur les figures 3 à 6, l'élément de sectionnement 16 comporte une pièce tubulaire axiale 18, logée autour de l'extrémité 17 du tronçon axial 11 de premier conducteur d'entrée, et comportant des perçages radiaux 19 et 20 traversés par au moins deux parties cassables 12 et 112 transversales de premier conducteur d'entrée elles-mêmes tendues entre l'extrémité 17 du tronçon axial 11 de premier conducteur d'entrée et deux soudures 13 et 113 espacées radialement et diamétralement opposées sur la première face d'extrémité 2 d'enroulement cylindrique 1.

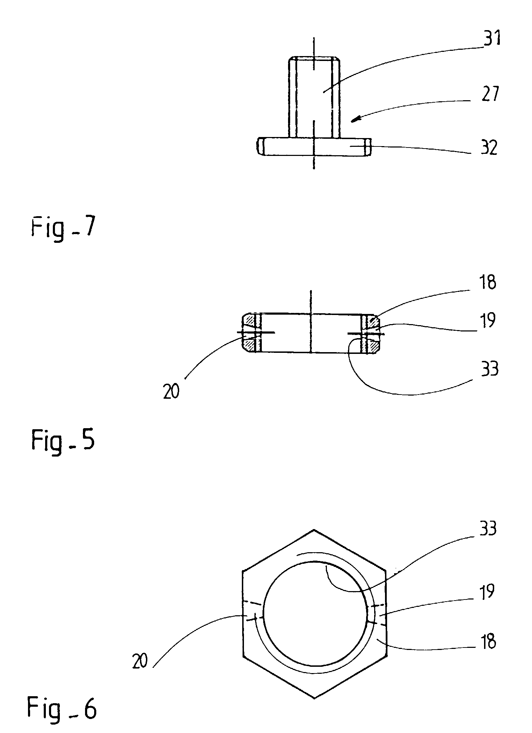

Comme illustré sur la figure 5, les perçages radiaux 19 et 20 peuvent avantageusement être coniques, pour définir un bord inférieur en arête aiguë favorisant le sectionnement des parties cassables 12 et 112 de premier conducteur d'entrée.

L'extrémité 17 du tronçon axial 11 est logée dans une pièce de centrage 21 isolante comportant une partie tubulaire interne 22 engagée en force dans le canal axial 10 d'enroulement cylindrique 1 et une collerette externe 23 contre laquelle vient en appui axial la pièce tubulaire axiale 18 de l'élément de sectionnement 16 avant claquage non autocicatrisant, comme le représente la figure 3.

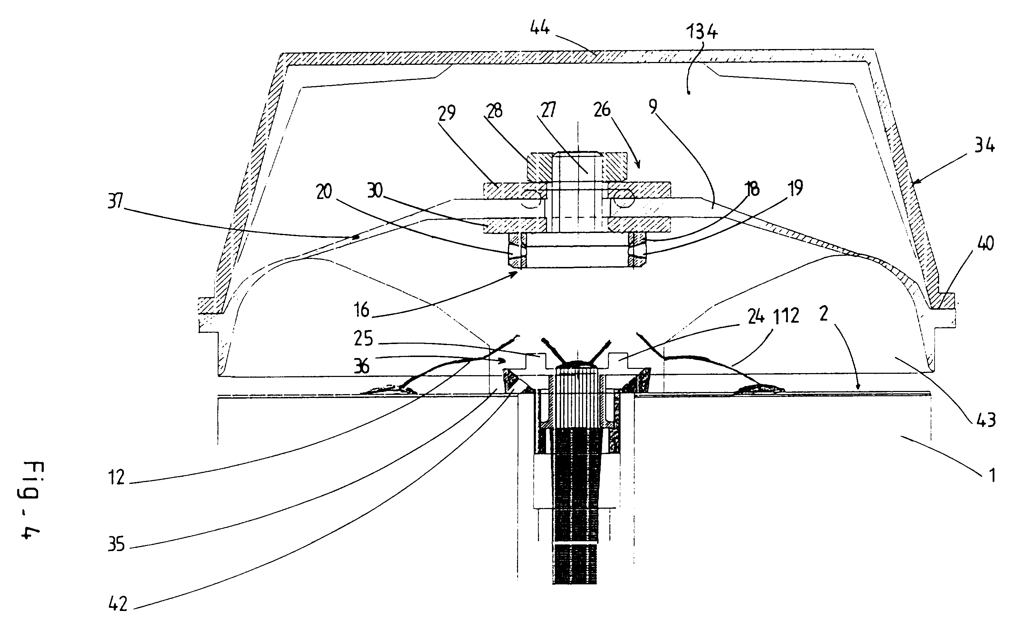

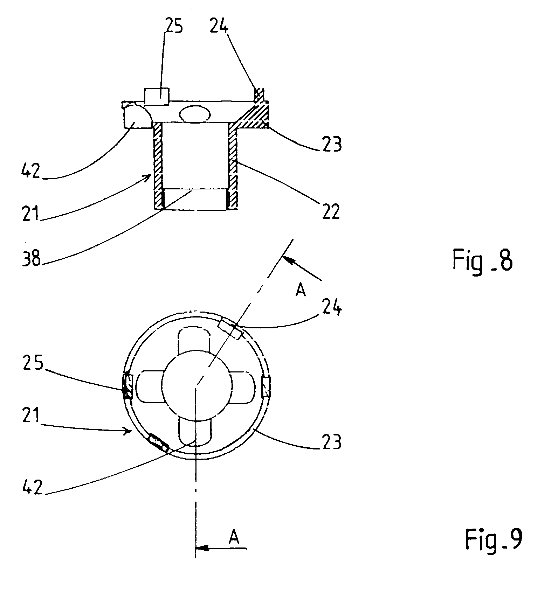

Les surfaces respectives d'appui entre la collerette externe 23 de pièce de centrage 21 et la pièce tubulaire 18 d'élément de sectionnement 16 sont conformées pour interdire la rotation relative de l'élément de sectionnement 16 et pour le retenir sur la pièce de centrage 21. Par exemple, la pièce de centrage 21 peut comprendre des griffes périphériques, telles que les griffes 24 et 25 visibles sur les figures 4, 8 et 9, venant en appui sur des faces planes de la surface latérale externe de la pièce tubulaire 18 d'élément de sectionnement 16, ladite face latérale externe étant par exemple conformée en six pans. La collerette externe 23 comporte des perçages 42 favorisant le passage ultérieur des gaz de combustion.

La pièce tubulaire 18 d'élément de sectionnement 16 est solidarisée par vissage à un ensemble de liaison 26 lui-même solidaire de la partie centrale de membrane déformable 9. L'ensemble de liaison 26 comprend une vis axiale 27, un écrou 28, deux rondelles 29 et 30, disposées comme illustré sur les figures. La vis 27, comme on le voit mieux sur les figures 3 et 7, comprend une tige 31 filetée, et une tête 32 également filetée. La partie centrale de membrane déformable 9 comprend un trou traversé par la tige 31 de vis 27, la tête 32 étant placée sur la face externe 37 de membrane 9 orientée vers l'élément cylindrique 1. Les rondelles 29 et 30 sont disposées de part et d'autre de la membrane déformable 9, traversées également par la tige 31 de vis 27, et le serrage de l'écrou 28 assure une fixation étanche de l'ensemble de liaison 26. La tête 32 filetée de vis 27 est adaptée pour se visser dans l'alésage interne taraudé correspondant 33 de la pièce tubulaire axiale 18.

La membrane déformable 9 est l'une des faces d'une capsule étanche 34 emplie d'un gaz tel que l'air. L'épaisseur de la capsule 34 est suffisante pour autoriser, sous la poussée des gaz de combustion provenant de l'élément cylindrique 1, une déformation de membrane déformable 9 telle qu'elle assure la rupture de la partie cassable de conducteur d'entrée 4.

Un diélectrique pâteux 35 emplit et enrobe l'élément de sectionnement 16, pour former une cheminée axiale 36 de passage de gaz entre la première face 2 de l'enroulement cylindrique 1 et la membrane déformable 9.

L'ensemble est noyé dans une résine diélectrique constituant la paroi périphérique étanche 8, rigide. De préférence, la face externe 37 de membrane déformable 9 est également enduite de diélectrique pâteux 35, évitant son adhérence sur la résine, qui vient emplir l'espace périphérique entre la première face 2 de l'élément cylindrique 1 et la membrane déformable 9, formant une paroi intermédiaire 43 autour de la cheminée axiale 36. La portion intermédiaire 15 de partie cassable de premier conducteur d'entrée se trouve ainsi tenue par la résine à proximité de l'élément de sectionnement 16, ce qui favorise un sectionnement rapide et efficace de ladite partie cassable de conducteur.

La face latérale externe 6 de l'élément cylindrique 1 peut également être avantageusement enduite de diélectrique pâteux 35, pour constituer un cheminement préférentiel des gaz de combustion, se propageant ensuite le long de la première face 2 d'extrémité métallisée et par la cheminée axiale 36 vers la membrane déformable 9.

Le montage du condensateur selon l'invention peut avantageusement comprendre les étapes ci-après. On adapte une pièce de centrage 21 dans l'extrémité du canal 10 de l'enroulement cylindrique 1. On adapte ensuite, par la même extrémité, le tronçon axial 11 de premier conducteur d'entrée, dont l'extrémité 17 porte une pièce métallique de blocage 41 sertie et venant en appui sur un épaulement 38 de la pièce de centrage 21. On positionne la pièce tubulaire axiale 18 dans la collerette externe 23 de la pièce de centrage 21, ladite pièce tubulaire axiale 18 étant traversée transversalement selon ses perçages 19 et 20 par un fil métallique transversal destiné à former les parties cassables 12 et 112 de premier conducteur d'entrée. On peut alors réaliser les soudures 13 et 113 des extrémités du fil métallique sur la première face 2 de l'enroulement cylindrique 1, et une soudure centrale 39 de ce même fil métallique sur l'extrémité 17 du tronçon axial 11 de premier conducteur d'entrée. Séparément, on a adapté la vis 27, les rondelles 29 et 30 et l'écrou 28 sur la partie centrale de membrane déformable 9, puis on a complété la capsule 34 par adaptation de la seconde paroi 44 de capsule solidarisée à la membrane déformable 9 par une soudure périphérique 40. On enduit de diélectrique pâteux 35 l'intérieur et l'extérieur de la pièce tubulaire axiale 18 et de la pièce de centrage 21, ainsi que la face externe 37 de la membrane déformable 9. Le diélectrique pâteux 35 en excès est destiné à former ensuite la cheminée axiale 36 de passage des gaz. On peut alors adapter par vissage la capsule 34 munie de son ensemble de liaison 26, qui se trouve ainsi maintenue sur l'enroulement cylindrique 1. L'ensemble peut alors être noyé dans une résine diélectrique, de préférence sous vide, de façon à éliminer l'air autour de l'enroulement cylindrique 1, autour de la capsule 34, et autour du diélectrique pâteux 35. La résine constitue ainsi la paroi périphérique 8 étanche et rigide de boîtier, et elle vient également former la paroi intermédiaire 43.

Le diélectrique pâteux 35 est avantageusement une graisse au silicone. On peut par exemple utiliser une graisse vendue sous la référence RHODERFIL PATE 4 par la société française RHODERFIL SILICONE.

Comme illustré sur les figures, l'élément de sectionnement 16 est conformé pour écarter les extrémités de conducteur après rupture de la partie cassable de premier conducteur d'entrée. Pour cela, la pièce tubulaire axiale 18 présente une épaisseur non négligeable, forçant les extrémités de partie cassable de conducteur d'entrée à se courber après rupture, comme illustré sur la figure 4.

La partie cassable de premier conducteur d'entrée est de préférence en un matériau à faible capacité de déformation élastique. De cette façon, après rupture, les portions de conducteur conservent la déformation permanente qui leur a été imposée par la pièce tubulaire axiale 18 lors de la rupture, pour maintenir l'écartement de leurs extrémités. On peut avantageusement utiliser un fil en cuivre recuit, éventuellement recouvert d'argent.

De bons résultats ont été obtenus en utilisant un fil de cuivre recuit argenté de diamètre égal à 0,4 mm environ, sollicité par une pièce tubulaire axiale dont la paroi a une épaisseur de 1 mm environ.

La résine constituant la paroi périphérique 8 de boîtier peut, par exemple, être une résine diélectrique telle qu'une résine polyuréthanne chargée.

La membrane déformable 9 peut être réalisée en une matière plastique telle que le chlorure de polyvinyle ou le polyéthylène.

On a représenté sur les figures un premier conducteur d'entrée 4 à deux parties cassables radiales diamétralement opposées 12 et 112. On peut également augmenter le nombre de portions radiales de conducteur, pour améliorer la répartition du courant, et diminuer l'inductance du condensateur. On notera que cette inductance est déjà réduite à son minimum, par le fait que les portions radiales cassables 12 et 112 de premier conducteur d'entrée sont très proches de la première face d'extrémité 2 de l'enroulement cylindrique 1.

Le fonctionnement du dispositif est le suivant : en position de fonctionnement normal, représentée sur les figures 1 et 3, la membrane déformable 9 est en appui sur la partie de résine qui s'est logée entre la membrane déformable 9 et la première face d'extrémité 2 de l'enroulement cylindrique 1 pour former la paroi intermédiaire 43, la pièce tubulaire axiale 18 étant logée dans et contre la pièce de centrage 21. Lorsque se produisent des claquages partiels non autocicatrisants de l'élément à enroulement cylindrique 1, des dégagements gazeux interviennent par décomposition des matières constituant l'enroulement cylindrique 1 au voisinage de la zone de claquage. Les gaz produits tendent à augmenter la pression dans le compartiment occupé par l'élément cylindrique 1. Les gaz cheminent à travers le diélectrique pâteux 35 jusque sous la membrane déformable 9, et tendent à repousser la membrane déformable 9 à l'écart de la première face d'extrémité 2 de l'enroulement cylindrique 1, comprimant l'air contenu dans la capsule 34. La membrane déformable 9 tend alors à entraîner en translation axiale l'élément de sectionnement 16, et en particulier la pièce tubulaire axiale 18 qui se trouve retenue par les seules parties cassables 12 et 112 de premier conducteur d'entrée. Lorsque la pression des gaz devient suffisante et dépasse un seuil déterminé, la force exercée axialement sur l'élément de sectionnement 16 qui tire axialement sur la portion intermédiaire 15 et/ou 115 de partie cassable 12 et/ou 112 de premier conducteur d'entrée produit la rupture de cette partie cassable pour ouvrir le circuit électrique et déconnecter le condensateur, comme illustré sur les figures 2 et 4. La rupture intervient dans une atmosphère constituée des seuls gaz de décomposition de l'enroulement cylindrique 1. Après rupture, les extrémités correspondantes des parties cassables 12 et 112 restent recourbées à l'écart de la première face d'extrémité 2 de l'enroulement cylindrique 1, et restent ainsi écartées les unes des autres.

La présente invention n'est pas limitée aux modes de réalisation qui ont été explicitement décrits, mais elle en inclut les diverses variantes et généralisations contenues dans le domaine des revendications ci-après.

## Revendications

1. Condensateur autoprotégé comprenant :
- au moins un élément (1) à enroulement cylindrique axial de couches isolantes et de couches conductrices de l'électricité formant une première et une seconde électrodes de type autocicatrisant isolées l'une de l'autre,
- un premier conducteur d'entrée (4) connecté électriquement à la première électrode selon la première face d'extrémité (2) de l'enroulement cylindrique (1),
- un second conducteur d'entrée (5) connecté électriquement à la seconde électrode,
- un boîtier rigide à paroi périphérique (8) étanche, enfermant l'élément à enroulement cylindrique (1), et traversée de manière étanche par les premier (4) et second (5) conducteurs d'entrée,
- une membrane intermédiaire déformable (9), solidarisée de façon étanche selon sa périphérie à la paroi périphérique (8) étanche, disposée en regard de la première face d'extrémité (2) de l'enroulement cylindrique (1), adaptée pour se déformer dans la direction axiale de l'enroulement cylindrique (1) vers l'extérieur sous la poussée des gaz produits par la décomposition d'une portion de l'élément à enroulement cylindrique (1) en cas de claquage non autocicatrisant,
- au moins une partie cassable (12) de premier conducteur d'entrée (4),
- des moyens de liaison mécanique entre ladite partie cassable (12) de premier conducteur d'entrée (4) et ladite membrane déformable (9), adaptés pour rompre ladite partie cassable (12) de premier conducteur d'entrée (4) lors de la déformation axiale vers l'extérieur de ladite membrane déformable (9),
caractérisé en ce que :
- la partie cassable (12) de premier conducteur d'entrée (4) est disposée transversalement par rapport à la direction axiale de l'enroulement cylindrique (1), dans l'espace entre la membrane déformable (9) et la première face d'extrémité (2) de l'enroulement cylindrique (1), et est tenue à ses deux extrémités en deux points fixes (13, 14),
- une portion intermédiaire (15) de partie cassable (12) de premier conducteur d'entrée (4) passe entre la membrane déformable (9) et un élément de sectionnement (16) solidaire de la membrane déformable (9), de sorte que, lors de sa déformation axiale, la membrane déformable (9) déplace dans la direction axiale l'élément de sectionnement (16) qui tire dans cette même direction axiale sur la portion intermédiaire (15) de partie cassable (12) de premier conducteur d'entrée (4) et favorise sa rupture pour ouvrir le circuit électrique et déconnecter ainsi le condensateur.

2. Condensateur selon la revendication 1, caractérisé en ce que l'élément de sectionnement (16) est conformé pour écarter les extrémités de conducteur après rupture.

3. Condensateur selon l'une des revendications 1 ou 2, caractérisé en ce que la partie cassable (12) de premier conducteur d'entrée (4) est en un matériau à faible capacité de déformation élastique, de sorte que, après rupture, les portions de conducteur conservent une déformation permanente maintenant l'écartement de leurs extrémités.

4. Condensateur selon l'une quelconque des revendications 1 à 3, caractérisé en ce que :
- l'élément à enroulement cylindrique (1) comporte un canal axial (10) traversé par un tronçon axial (11) de premier conducteur d'entrée (4) dont l'extrémité (17) est fixe et accessible depuis la première face d'extrémité (2) de l'enroulement cylindrique (1),
- la partie cassable (12) de premier conducteur d'entrée (4) est connectée à la première face d'extrémité (2) de l'enroulement cylindrique (1) par une soudure (13) formant le premier point fixe, et est connectée à l'extrémité (17) du tronçon axial (11) de premier conducteur d'entrée (4) formant le second point fixe (14).

5. Condensateur selon la revendication 4, caractérisé en ce que l'élément de sectionnement (16) comporte une pièce tubulaire axiale (18) logée autour de l'extrémité (17) du tronçon axial (11) de premier conducteur d'entrée (4), et munie de perçages radiaux (19, 20) traversés par au moins deux parties cassables (12, 112) transversales de premier conducteur d'entrée (4) tendues entre l'extrémité (17) du tronçon axial (11) de premier conducteur d'entrée (4) et deux soudures (13, 113) espacées radialement sur la première face d'extrémité (2) d'enroulement cylindrique (1).

6. Condensateur selon la revendication 5, caractérisé en ce que l'extrémité (17) du tronçon axial (11) est logée dans une pièce de centrage (21) isolante comportant une partie tubulaire interne (22) engagée en force dans le canal axial (10) d'enroulement cylindrique (1) et une collerette externe (23) contre laquelle vient en appui axial la pièce tubulaire axiale (18) d'élément de sectionnement (16) avant claquage non autocicatrisant.

7. Condensateur selon la revendication 6, caractérisé en ce que :
- les surfaces respectives d'appui entre la collerette externe (23) de pièce de centrage (21) et la pièce tubulaire (18) d'élément de sectionnement (16) sont conformées pour interdire la rotation relative de l'élément de sectionnement (16) et pour le retenir sur la pièce de centrage (21),
- la pièce tubulaire (18) d'élément de sectionnement (16) est solidarisée par vissage à un ensemble de liaison (26) solidaire de la partie centrale de membrane déformable (9),
de sorte que la membrane déformable (9) peut être adaptée par vissage sur la pièce tubulaire (18) d'élément de sectionnement (16) après connexion de la partie cassable (12, 112) de premier conducteur d'entrée (4), et se trouve alors tenue sur l'enroulement cylindrique (1).

8. Condensateur selon l'une quelconque des revendications 4 à 7, caractérisé en ce que la membrane déformable (9) est l'une des faces d'une capsule étanche (34) emplie d'un gaz tel que l'air, l'épaisseur de la capsule (34) étant suffisante pour autoriser une déformation de membrane déformable (9) telle qu'elle assure la rupture de la partie cassable (12, 112) de conducteur d'entrée (4).

9. Condensateur selon la revendication 8, caractérisé en ce que :
- un diélectrique pâteux (35) emplit et enrobe l'élément de sectionnement (16) pour former une cheminée axiale (36) de passage de gaz entre la première face (2) de l'enroulement cylindrique (1) et la membrane déformable (9),
- l'ensemble est noyé dans une résine diélectrique constituant la paroi périphérique (8) étanche, et constituant une paroi intermédiaire (43) autour de la cheminée axiale (36).

10. Condensateur selon la revendication 9, caractérisé en ce que la face externe (37) de membrane déformable (9) est enduite de diélectrique pâteux (35), évitant son adhérence sur la résine.

## Patentansprüche

1. Eigengesicherter Kondensator, bestehend aus:
- wenigstens einem Element (1) mit einer axialen zylindrischen Wicklung aus elektrischen Isolierschichten und Leiterschichten, die gegeneinander isoliert sind und eine erste und eine zweite Elektrode des sich selbst vernarbenden Typs bilden,
- einem ersten Eingangs leiter (4), der mit der ersten Elektrode an der ersten endseitigen Stirnfläche (2) der zylindrischen Wicklung (1) elektrisch verbunden ist,
- einem zweiten Eingangs leiter (5), der mit der zweiten Elektrode elektrisch verbunden ist,
- einem starren Gehäuse mit einer undurchlässigen Umfangswand (8), welche das Element mit der zylindrischen Wicklung (1) umschließt, und in einer dichten Art und Weise von den ersten (4) und zweiten (5) Eingangsleitern durchquert ist,
- einer verformbaren mittleren Membrane (9), die in einer dichten Art und Weise an ihrem Umfang mit der undurchlässigen Umfangswand (8) vereinigt ist, die in Bezug auf die erste endseitige Stirnfläche (2) der zylindrischen Wicklung (1) angeordnet ist,und die dafür angepaßt ist, sich in der axialen Richtung der zylindrischen Wicklung (1) unter dem Druck von Gasprodukten nach außen zu verformen durch die Zerstörung eines Teils des Elements mit der zylindrischen Wicklung (1) in dem Fall eines sich nicht selbst vernarbenden Durchschlages,
- wenigstens einem zerbrechlichen Bereich (12) des ersten Eingangs leiters (4),
- mechanischen Verbindungsmitteln zwischen dem besagten zerbrechlichen Bereich (12) des ersten Eingangs leiters (4) und der besagten verformbaren Membrane (9), welche dafür angepaßt sind, den besagten zerbrechlichen Bereich (12) des ersten Eingangs leiters (4) bei der axialen Verformung nach außen der besagten verformbaren Membrane (9) zu zerbrechen,
dadurch gekennzeichnet, daß :
- der zerbrechliche Bereich (12) des ersten Eingangsleiters (4) in Bezug auf die axiale Richtung der zylindrischen Wicklung (1) quer angeordnet ist, in dem Zwischenraum zwischen der verformbaren Membrane (9) und der ersten endseitigen Stirnfläche (2) der zylindrischen Wicklung (1), und an seinen beiden Enden an zwei Fixpunkten (13, 14) gehalten wird,
- ein mittlerer Abschnitt (15) des zerbrechlichen Bereichs (12) des ersten Eingangsleiters (4) zwischen der verformbaren Membrane (9) und einem Unterteilungselement (16) verläuft, welches mit der verformbaren Membrane (9) gemeinsam ist, sodaß bei der axialen Verformung, die verformbare Membrane (9) in der axialen Richtung des Unterteilungselements (16) versetzt wird, welches in dieser gleichen axialen Richtung einen Zug auf den mittleren Abschnitt (15) des zerbrechlichen Bereichs (12) des ersten Eingangs leiters (4) ausübt und sein Zerbrechen begünstigt, um den elektrischen Stromkreis zu öffnen und so den Kondensator zu unterbrechen.

2. Kondensator nach Anspruch 1, dadurch gekennzeichnet, daß das Unterteilungselement (16) dafür eingerichtet ist, die Enden des Leiters nach dem Zerbrechen zu trennen.

3. Kondensator nach einem der Ansprüche 1 oder 2, dadurch gekennzeichnet, daß der zerbrechliche Bereich (12) des ersten Eingangsleiters (4) aus einem Material mit einem schwachen elastischen Verformungsvermögen besteht, sodaß nach dem Zerbrechen die Abschnitte des Leiters eine dauerhafte Verformung konservieren, welche die Trennung ihrer Enden beibehält.

4. Kondensator nach einem der Ansprüche 1 bis 3, dadurch gekennzeichnet, daß :
- das Element mit der zylindrischen Wicklung (1) einen axialen Kanal (10) aufweist, der von einem axialen Teilabschnitt (11) des ersten Eingangs leiters (4) durchquert ist, dessen Ende (17) befestigt und über die erste endseitige Stirnfläche (2) der zylindrischen Wicklung (1) zugänglich ist,
- der zerbrechliche Bereich (12) des ersten Eingangsleiters (4) mit der ersten endseitigen Stirnfläche (2) der zylindrischen Wicklung (1) durch eine Verschweissung (13) verbunden ist, welche den ersten feststehenden Punkt bildet, und mit dem Ende (17) des axialen Teilabschnittes (11) des ersten Eingangs leiters (4) verbunden ist, welches den zweiten feststehenden Punkt (14) bildet.

5. Kondensator nach Anspruch 4, dadurch gekennzeichnet, daß das Unterteilungselement (16) ein axiales rohrförmiges Stück (18) aufweist, das um das Ende (17) des axialen Teilabschnittes (11) des ersten Eingangsleiters (4) herum angeordnet, und mit radialen Bohrungen (19, 20) versehen ist, die von wenigstens zwei quer verlaufenden zerbrechlichen Bereichen (12, 112) des ersten Eingangsleiters (4) durchquert sind, welche zwischen dem Ende (17) des axialen Teilabschnittes (11) des ersten Eingangsleiters (4) und zwei Verschweißungen (13, 113) gehalten sind, die an der ersten endseitigen Stirnfläche (2) der zylindrischen Wicklung (1) in radialer Richtung voneinander beabstandet sind.

6. Kondensator nach Anspruch 5, dadurch gekennzeichnet, daß das Ende (17) des axialen Teilabschnittes (11) in einem Isolier-Zentrierungsstück (21) angeordnet ist, welches einen inneren rohrförmigen Bereich (22) aufweist, der kraftschlüssig in dem axialen Kanal (10) der zylindrischen Wicklung (1) angeordnet ist, und einen äußeren Kragen (23), gegen welchen das axiale rohrförmige Stück (18) des Unterteilungselements (16) vor dem sich nicht selbst vernarbenden Durchschlag axial zur Anlage kommt.

7. Kondensator nach Anspruch 6, dadurch gekennzeichnet, daß:
- die betreffenden Anlageflächen zwischen dem äußeren Kragen (23) des Zentrierungsstückes (21) und dem rohrförmigen Stück (18) des Unterteilungselements (16) dafür vorgesehen sind, eine relative Drehung des Unterteilungselements (16) zu verhindern und es an dem Zentrierungsstück (21) zurückzuhalten,
- das rohrförmige Stück (18) des Unterteilungselements (16) durch eine Verschraubung mit einer Verbindungsgesamtheit (26) gemeinsam ist, die mit dem zentralen Bereich der verformbaren Membrane (9) verbunden ist, derart, daß die verformbare Membrane (9) durch eine Verschraubung an dem rohrförmigen Stück (18) des Unterteilungselements (16) angepaßt werden kann nach der Verbindung des zerbrechlichen Bereichs (12, 112) des ersten Eingangs leiters (4), und sich dann gehalten findet auf der zylindrischen Wicklung (1).

8. Kondensator nach einem der Ansprüche 4 bis 7, dadurch gekennzeichnet, daß die verformbare Membrane (9) die eine der Stirnflächen einer undurchlässigen Kapsel (34) ist, die mit einem Gas wie bspw. Luft gefüllt ist, wobei die Dicke der Kapsel (34) genügend groß ist, um eine solche Verformung der verformbaren Membrane (9) zu erlauben, daß sie das Zerbrechen des zerbrechlichen Bereichs (12, 112) des Eingangsleiters (4) sicherstellt.

9. Kondensator nach Anspruch 8, dadurch gekennzeichnet, daß :
- ein pastöses Dielektrikum (35) das Unterteilungselement (16) ausfüllt und auskleidet, um einen axialen Kamin (36) für einen Gasdurchgang zwischen der ersten Stirnfläche (2) der zylindrischen Wicklung (1) und der verformbaren Membrane (9) zu bilden,
- die Gesamtheit in einem dielektrischen Harz versenkt ist, welches die undurchlässige Umfangswand (8) bildet, und welches eine mittlere Wand (43) um den axialen Kamin (36) herum ergibt.

10. Kondensator nach Anspruch 9, dadurch gekennzeichnet, daß die äußere Stirnfläche (37) der verformbaren Membrane (9) mit einem pastösen Dielektrikum (35) bestrichen ist, welches sein Anhaften an dem Harz verhindert.

## Claims

1. Self-protected capacitor comprising:
- at least one axial cylindrical winding element (1) of electricity insulating layers and electricity conductive layers forming a first and second self-healing type electrodes insulated from each other,
- a first inlet conductor (4) electrically connected to the first electrode through the first end face (2) of the cylindrical winding (1),
- a second inlet conductor (5) electrically connected to the second electrode,
- a solid casing with peripheral impervious walls (8), enclosing the cylindrical winding element (1), and the first (4) and second (5) inlet conductors running imperviously through it,
- an intermediate deformable membrane (9), imperviously embodied in respect to its periphery with the peripheral impervious wall (8), arranged opposite the first end face (2) of the cylindrical winding (1), adapted to be outwardly deformable in the axial direction of the cylindrical winding (1) under the thrust of gases produced by the decomposition of a portion of the cylindrical winding element (1) in the case of non-self-healing breakdown,
- at least one breakable part (12) of first inlet conductor (4),
- mechanical linkage means between the said breakable part (12) of first inlet conductor (4) and said deformable membrane (9), adapted to break said breakable part (12) of first inlet conductor (4) at the time of the outwards axial deformation of said deformable membrane (9),
characterised in that:
- the breakable part (12) of first inlet conductor (4) is placed crosswise from the axial direction of the cylindrical winding (1), in the space between the deformable membrane (9) and the first end face (2) of the cylindrical winding (1), and is held at both ends at two fixed points (13, 14),
- an intermediate portion (15) of breakable part (12) of first inlet conductor (4) runs between the deformable membrane (9) and a severing element (16) which is embodied with the deformable membrane (9), so that during the axial deformation, the deformable membrane (9) displaces in the axial direction the severing element (16) which pulls in this same axial direction on the intermediate portion (15) of breakable part (12) of first inlet conductor (4) and facilitates its rupture to open the electric circuit and thus disconnect the capacitor.

2. Capacitor according to Claim 1, characterised in that the severing element (16) is adapted to separate the conductor ends after rupture.

3. Capacitor according to any of Claims 1 or 2, characterised in that the breakable part (12) of first inlet conductor (4) in made of a low elastic deformation capacity material, so that, after rupture, the conductor portions maintain a permanent deformation keeping the separation of the extremities thereof.

4. Capacitor according to any of Claims 1 to 3, characterised in that:
- The cylindrical winding element (1) comprises an axial channel (10) through which runs an axial section (11) of first inlet conductor (4), the extremity (17) of which is fixed and accessible from the first end face (2) of the cylindrical winding (1),
- the breakable part (12) of first inlet conductor (4) is connected to the first end face (2) of the cylindrical winding (1) by soldering (13) forming the first fixed point, and is connected to the extremity (17) of the axial section (11) of first inlet conductor (4) forming the second fixed point (14).

5. Capacitor according to Claim 4, characterised in that the severing element (16) comprises an axial tubular part (18) situated around the extremity (17) of the axial section (11) of first inlet conductor (4), and provided with radial drillings (19, 20) through which run at least two transversal breakable parts (12, 112) of first inlet conductor (4) stretched between the extremity (17) of axial portion (11) of first inlet conducteur (4) and two solderings (13, 113) radially spaced on the first end face (2) of the cylindrical winding (1).

6. Capacitor according to Claim 5, characterised in that the extremity (17) of the axial section (11) is housed inside an insulating centring part (21) comprising an internal tubular part (22) forcibly inserted in the axial channel (10) of cylindrical winding (1) and an external flange (23) against which axially bears the axial tubular part (18) of severing element (16) bears previous to non auto-healing rupture.

7. Capacitor according to Claim 6, characterised in that:
- the respective bearing surfaces between the external flange (23) of centring part (21) and the tubular part (18) of severing element (16) are adapted to prevent the relative rotation of the severing element (16) and to retain it on the centring part (21),
- the tubular part (18) of severing element (16) forms integral part through screwing to a connection set (26) embodied with the central part of the deformable membrane (9),
so that the deformable membrane (9) may be adapted by screwing onto the tubular part (18) of severing element (16) after connecting the breakable part (12, 112) of first inlet conductor (4), and is therefore retained on the cylindrical winding (1).

8. Capacitor according to any of Claims 4 to 7, characterised in that the deformable membrane (9) is one face among the faces of a sealed capsule (34) filled with a gas such as air, the thickness of the capsule (34) being sufficient to allow the deformable membrane (9) to change shape so that it ensures the rupture of the breakable part (12, 112) of inlet conductor (4).

9. Capacitor according to Claim 8, characterised in that:
- a pasty dielectric (35) fills and envelops the severing element (16) to form an axial shaft (36) for passing gas between the first face (2) of cylindrical winding (1) and the deformable membrane (9),
- the set is drowned into a dielectric resin forming the impervious peripheral wall (8), and forming an intermediate wall (43) around the axial shaft (36)

10. Capacitor according to Claim 9, characterised in that the external face (37) of deformable membrane (9) is coated with pasty dielectric (35), preventing it from adhering onto the resin.
